# EUROPEAN PATENT APPLICATION

(11) **EP 4 187 335 A1**
(43) Date of publication of application: **31.05.2023**
(21) Application number: 22209256.1
(22) Date of filing: 24.11.2022
(51) Int. Cl.: G05B 19/042

(54) **PROGRAM, COMPUTER-READABLE RECORDING MEDIUM, METHOD, AND SYSTEM**

(30) Priority: 26.11.2021 JP 2021191677
(71) Applicant: Yokogawa Electric Corporation, Musashino-shi, Tokyo 180-8750 (JP)
(72) Inventor: TSUKAMOTO, Riko, Tokyo, 180-8750 (JP)
(74) Representative: Zimmermann, Tankred Klaus

(57) **Abstract**

A program includes a tool program (22a) that causes an information processing apparatus (2) to execute a process of collectively displaying, in an editable manner, parameters (p) that are to be written to each of sensors (1) and generating a setting file (F) that includes the parameters (p), and an application program (33a) that causes a terminal device (3) to execute a process of writing a parameter corresponding to each of the sensors (1) included in the setting file (F), to each of the sensors (1) by using short-range wireless communication.

## Description

### BACKGROUND OF THE INVENTION

### Field of the Invention

The present invention relates to a program, a computer-readable recording medium, a method, and a system, and more particularly, to a program, a computer-readable recording medium, a method, and a system for writing a parameter to a sensor.

### Description of the Related Art

A sensor that is installed in a plant or the like for collecting data is known (for example, see Masahisa Saitou, et al, "Sushi Sensor for Achieving Industrial IoT Solutions", Yokogawa Technical Report, Vol. 61, No. 1, 2018).

For example, operation of writing a parameter to each of sensors is needed before installation of a plurality of sensors. There is room for consideration of improvement in operation efficiency.

According to one aspect of the present invention, it is possible to improve efficiency of operation of writing a parameter to a sensor.

### SUMMARY OF THE INVENTION

According to one aspect of embodiments, a program includes: a tool program that causes an information processing apparatus to execute a process of collectively displaying parameters in an editable manner, the parameters being to be written to each of sensors, and generating a setting file that includes the parameters; and an application program that causes a terminal device to execute a process of writing a parameter corresponding to each of the sensors included in the setting file, to each of the sensors by using short-range wireless communication.

According to one aspect of embodiments, a computer-readable recording medium stores therein the above mentioned program.

According to one aspect of embodiments, a method inculludes: collectively displaying parameters in an editable manner, the parameters being to be written to each of sensors, and generating a setting file that includes the parameters; and writing a parameter corresponding to each of the sensors included in the setting file, to each of the sensors by using short-range wireless communication.

According to one aspect of embodiments, a system includes: an information processing apparatus that collectively displays, parameters in an editable manner, the parameters being to be written to each of sensors, and generates a setting file that includes the parameters; and a terminal device that writes a parameter corresponding to each of the sensors included in the setting file, to each of the sensors by using short-range wireless communication.

### BRIEF DESCRIPTION OF THE DRAWINGS

FIG. 1 is a schematic diagram illustrating a system 100 according to an embodiment;
FIG. 2 is a diagram illustrating an example of functional blocks of an information processing apparatus 2;
FIG. 3 is a diagram illustrating an example of a tool screen at the time of generation of a setting file F;
FIG. 4 is a flowchart illustrating an example of a process (method) that is performed by the information processing apparatus 2 when generating the setting file F;
FIG. 5 is a diagram illustrating an example of the setting file F that is generated by the information processing apparatus 2;
FIG. 6 is a diagram illustrating an example of functional blocks of a terminal device 3;
FIG. 7 is a flowchart illustrating an example of a process (method) that is performed by the terminal device 3 when generating a database 33b;
FIG. 8 is a diagram illustrating an example of the database 33b;
FIG. 9 is a diagram illustrating an example of an application screen at the time of writing operation;
FIG. 10 is a flowchart illustrating an example of a process (method) that is performed by the terminal device 3 when performing writing operation based on a first scenario;
FIG. 11 is a flowchart illustrating an example of a process (method) that is performed by the terminal device 3 when performing writing operation based on a second scenario;
FIG. 12 is a diagram illustrating an example of the database 33b after completion of the writing operation;
FIG. 13 is a diagram illustrating an example of the updated setting file F;
FIG. 14 is a diagram illustrating an example of the tool screen at the time of generation of a report;
FIG. 15 is a diagram illustrating a terminal device 3 according to a modification; and
FIG. 16 is a diagram illustrating an example of a hardware configuration of an apparatus.

### DETAILED DESCRIPTION OF THE PREFERRED EMBODIMENTS

Embodiments will be described below with reference to the drawings. The same components are denoted by the same reference signs, and repeated explanation will be omitted appropriately.

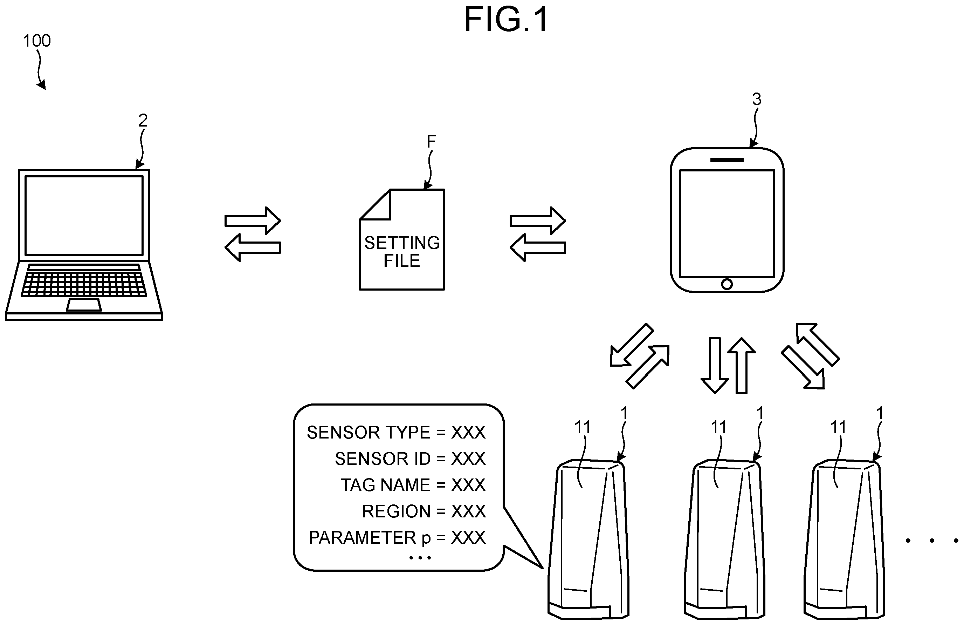

FIG. 1 is a schematic diagram illustrating a system 100 according to one embodiment. The system 100 is used to write parameters p to a plurality of sensors 1. The system 100 illustrated as an example includes an information processing apparatus 2 and a terminal device 3.

Each of the sensors 1 is a sensor that is described in, for example, Masahisa Saitou, et al, "Sushi Sensor for Achieving Industrial IoT Solutions", Yokogawa Technical Report, Vol. 61, No. 1, 2018. The sensors 1 may be constituent elements of the system 100 or need not be constituent elements of the system 100. Each of the sensors 1 includes a communication unit 11 for communicating with the terminal device 3. The communication units 11 enable short-range wireless communication between the sensors 1 and the terminal device 3. Examples of the short-range wireless communication include near field communication (NFC) communication.

The sensors 1 are installed in various places and collect data. Examples of the installation place include a plant. Information is written to the sensors 1. In FIG. 1, a sensor type, a sensor ID, a tag name, a region, and the parameter p are illustrated as examples of the information to be written to the sensors 1. Meanwhile, XXX in the drawing schematically illustrates an arbitrary numerical value, letters, or the like.

The sensor type indicates a type of each of the sensors 1. Examples of the sensor type include a temperature sensor, a pressure sensor, and a vibration sensor. The sensor ID is information for individually identifying each of the sensors 1. Examples of the sensor ID include a serial number and an extended unique identifier (EUI). The sensor ID in the present disclosure may be regarded as including a plurality of pieces of information, such as the serial number and the EUI. The tag name is added especially for allowing a user (operator or the like) to easily identify each of the sensors 1. The region is a region in which each of the sensors 1 is installed. Examples of the region include Japan in Asia.

The parameter p is a setting parameter that is set in each of the sensors 1. Examples of the parameter p include a parameter that defines an external transmission interval for sensing data and a parameter that defines a data format. Various parameters are present in addition to the above, and the parameters may vary depending on the sensor type or the like. Meanwhile, the parameter p in the present disclosure may be regarded as a plurality of parameters that are written in the single sensor 1.

In the system 100, the parameters p are collectively written to the plurality of sensors 1 by cooperation of the information processing apparatus 2 and the terminal device 3. The plurality of sensors 1 are planned to be arranged in the same segment in a plant for example, and the parameters p are written in a state in which the sensors 1 are collectively placed in a single location before installation.

Examples of the information processing apparatus 2 include a personal computer (PC). Examples of the terminal device 3 include a mobile terminal device, such as a smartphone. The information processing apparatus 2, such as a PC, is advantageous in that it can display a large screen and allow easy user operation, as compared to the terminal device 3, such as a smartphone. In one embodiment, a screen (corresponding to a user interface (UI) unit 21 to be described later) of the information processing apparatus 2 may be larger than a screen (corresponding to a UI unit 32 to be described later) of the terminal device 3.

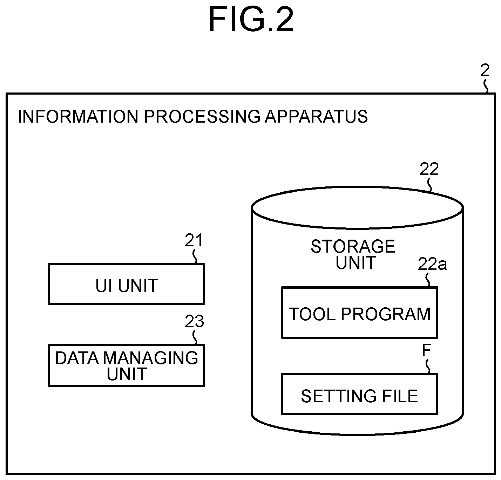

FIG. 1 schematically illustrates the flow of writing of the parameters p by several white arrows. The information processing apparatus 2 generates (creates) a setting file F that includes the parameters p. The terminal device 3 uses the setting file F that is generated by the information processing apparatus 2 and consecutively writes the parameters p to the plurality of sensors 1. The setting file F in which a writing result is reflected is returned from the terminal device 3 to the information processing apparatus 2. Details will be described below with reference to FIG. 2 and subsequent drawings.

FIG. 2 is a diagram illustrating an example of functional blocks of the information processing apparatus 2. The information processing apparatus 2 includes the UI unit 21, a storage unit 22, and a data managing unit 23.

The UI unit 21 is a user interface unit (a display unit, an operating unit, or the like) that provides (displays or the like) information to a user of the information processing apparatus 2 and receives operation that is performed by the user on the information processing apparatus 2. For example, the UI unit 21 collectively displays, in an integrally editable manner, the parameters p that are to be written to each of the sensors 1 at the time of generating the setting file F. The user operates the UI unit 21 while viewing the displayed information and generates the setting file F.

The storage unit 22 stores therein information that is used by the information processing apparatus 2. Examples of the information stored in the storage unit 22 include a tool program 22a and the setting file F. The tool program 22a is a program (software) that causes a computer to execute a process of the information processing apparatus 2, more specifically, processes of the UI unit 21, the data managing unit 23, and the like. By execution of the tool program 22a, a tool for generating the setting file F is executed. The setting file F is a file that includes the parameters p as described above.

The data managing unit 23 manages the setting file F. For example, the data managing unit 23 performs error check on the parameters p in the setting file F. Examples of the error check include determination on whether values of the parameters p fall within an appropriate range. Various error check items may be set by default or may be manually set by user operation or the like. By performing the error check, it is possible to reduce or prevent an operational error.

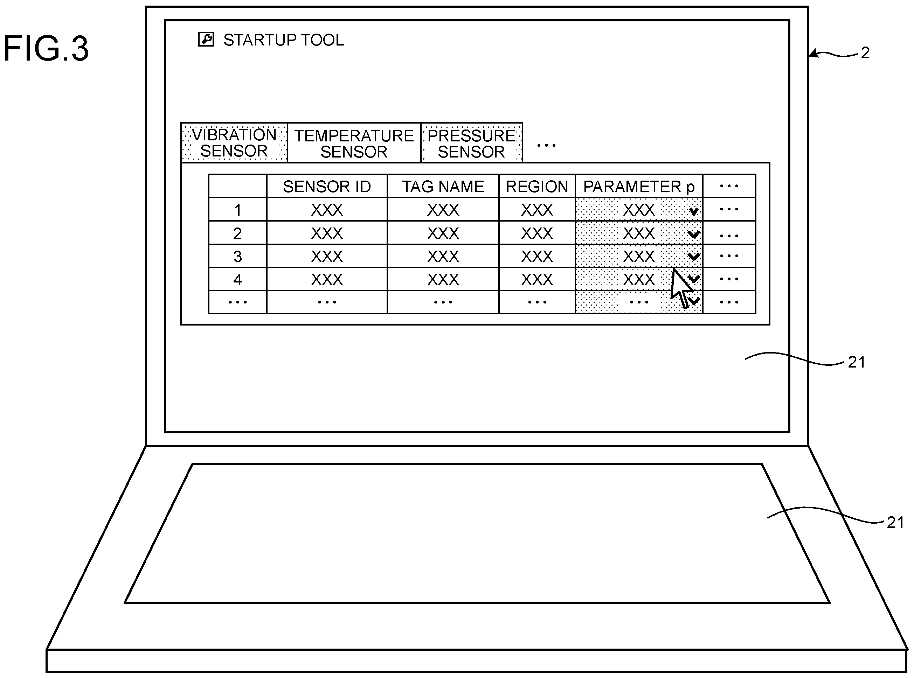

FIG. 3 is a diagram illustrating an example of a tool screen at the time of generation of the setting file F. The UI unit 21 of the information processing apparatus 2 is illustrated as a display, a keyboard, and the like, for example. In this example, a tool is referred to and displayed as a startup tool. Through user operation, the sensor type, that is, a temperature sensor in this example is selected. With respect to the selected sensor type, the sensor ID, the tag name, the region, the parameter p, and the like are collectively displayed for each serial number corresponding to each of the sensors 1. An initial value is given to each of the parameters p and is editable. The initial value may be set by, for example, a wizard format. The user of the information processing apparatus 2 selects the parameter p to be edited, and changes the parameter p for example. If the initial value is not given, an initial value is newly input. It is of course possible to perform various kinds of operation including addition of the sensor 1, in addition to edit of the parameters p. Meanwhile, when writing operation based on a first scenario (to be described later) is to be performed, it is acceptable that the sensor ID is blank.

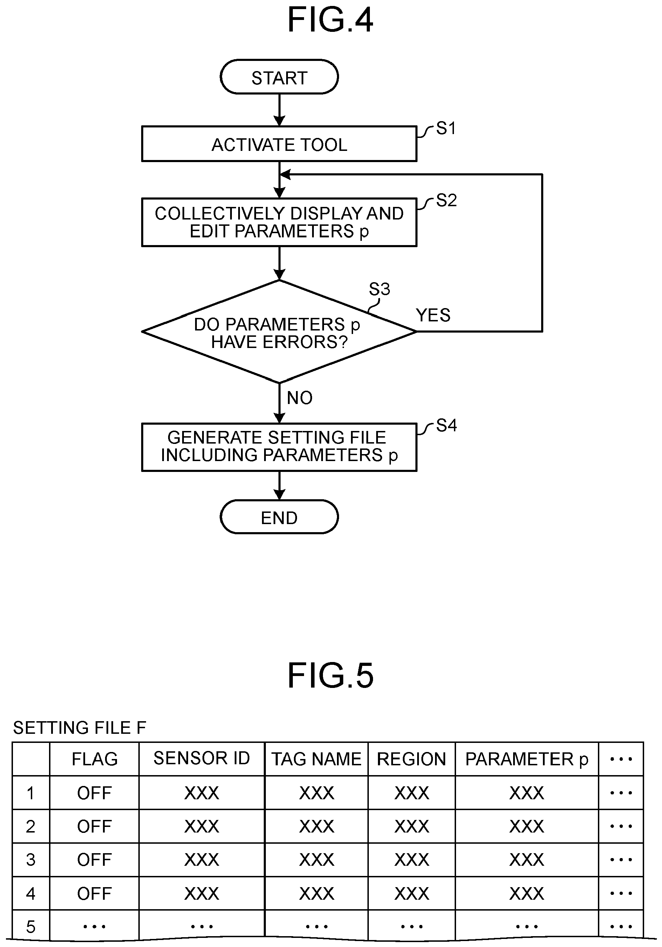

FIG. 4 is a flowchart illustrating an example of a process (method) that is performed by the information processing apparatus 2 when generating the setting file F. At Step S1, the tool is activated. The tool program 22a that is stored in the storage unit 22 is executed and the tool is activated. The initial values are given to the parameters p.

At Step S2, the parameters p and the like are collectively displayed and edited. The UI unit 21 displays the screen as described above with reference to FIG. 3, for example. Through user operation, the parameters p are changed, for example.

At Step S3, it is determined whether the parameters p have errors. The data managing unit 23 performs an error check on the edited parameters p. If the parameters p have errors (Step S3: Yes), the process returns to Step S2. For example, the UI unit 21 displays information on the error (presence of the error, a reason of the error, or the like), and the user changes the parameters p so as to resolve the the error, for example. If the parameters p do not have errors (Step S3: No), the process goes to Step S4.

At Step S4, the setting file F that includes the parameters p is generated. The data managing unit 23 generates the setting file F including the parameters p that are edited at previous Step S2. The generated setting file F is stored in the storage unit 22. Thereafter, the process in the flowchart is terminated.

FIG. 5 is a diagram illustrating an example of the setting file F that is generated by the information processing apparatus 2. In the setting file F, the parameters p of the respective sensors 1 are written (listed) in a sequential manner. In this example, information on each of the sensors 1 is written in sequence in the setting file F. A flag, the sensor ID, the tag name, the region, the parameter p, and the like are described in an associated manner for each of the numbers of the plurality of sensors 1. The flag is a flag (write completion flag) that indicates completion of writing of the parameter p to the corresponding sensor 1, and is set to OFF (not written) for each of the sensors 1 at this time point. Meanwhile, when the writing operation based on the first scenario (to be described later) is to be performed, it is acceptable that the sensor ID is blank.

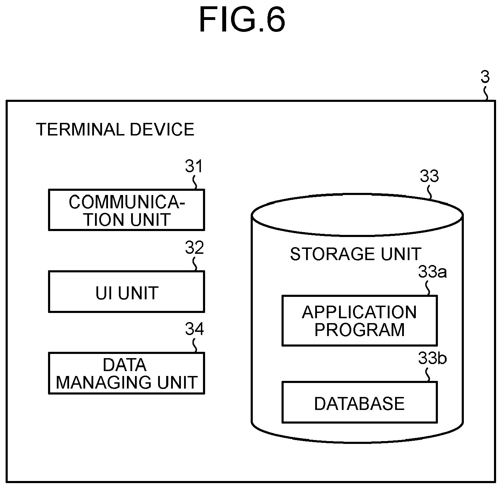

FIG. 6 is a diagram illustrating an example of functional blocks of the terminal device 3. The terminal device 3 includes a sensor communication unit 31, the UI unit 32, a storage unit 33, and a data managing unit 34.

The sensor communication unit 31 communicates with the communication units 11 of the sensors 1 (FIG. 1). The communication is, as described above, short-range wireless communication, such as NFC communication. For example, if a user of the terminal device 3 brings (holds) the terminal device 3 closer to (over) the sensor 1, communication between the sensor 1 and the terminal device 3 is established. In the following, it is assumed that the NFC communication indicates the short-range wireless communication unless otherwise specified. The NFC communication and the short-range wireless communication are appropriately replaced with each other as long as there is no contradiction.

The UI unit 32 is a user interface unit (a display unit, an operating unit, or the like) that provides information to the user of the terminal device 3 and receives operation that is performed by the user on the terminal device 3. For example, the UI unit 32 displays information for requesting the user to perform operation or the like that is needed to write the parameters p to the sensors 1. The user performs the writing operation while viewing the displayed information. Meanwhile, the user of the terminal device 3 may be the same as or different from the user of the information processing apparatus 2.

The storage unit 33 stores therein information that is used by the terminal device 3. Examples of the information stored in the storage unit 33 include an application program 33a and a database 33b. The application program 33a is a program (software) that causes a computer to execute a process of the terminal device 3, more specifically, processes of the sensor communication unit 31, the UI unit 32, the data managing unit 34, and the like. By execution of the application program 33a, an application for writing the parameters p to the sensors 1 is executed. The database 33b will be described later.

The data managing unit 34 manages writing of the parameters p to the sensors 1. Several examples of a process performed by the data managing unit 34 will be described below.

The data managing unit 34 acquires the setting file F from the information processing apparatus 2, and reads (loads) the information in the setting file F into the application. For example, the setting file F is sent from the terminal device 3 to the information processing apparatus 2 via a predetermined folder in a state in which the terminal device 3 and the information processing apparatus 2 are connected to each other by wire. The data managing unit 34 generates the database 33b that includes the same information as the information in the setting file F. The database 33b is accessible and editable through the application.

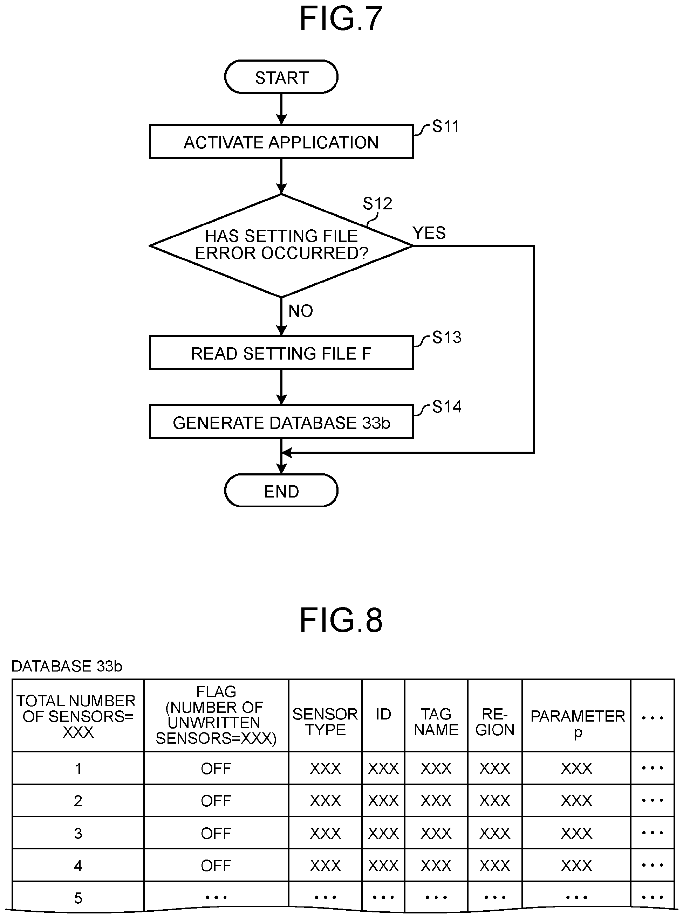

FIG. 7 is a flowchart illustrating an example of a process (method) that is performed by the terminal device 3 when generating the database 33b. At Step S11, the application is activated. The application program 33a that is stored in the storage unit 33 is executed and the application is activated.

At Step S12, it is determined whether a setting file error has occurred. If it is impossible to load the information in the setting file F onto the application, in particular, if the setting file F is not present in the predetermined folder as described above for example, the data managing unit 34 determines that the setting file error has occurred. If the setting file error has occurred (Step S12: Yes), the UI unit 32 displays, for example, an error and the process in the flowchart is terminated. In other cases (Step S12: No), the process goes to Step S13.

At Step S13 and Step S14, the setting file F is read and the database 33b is generated. The data managing unit 34 reads the setting file F from the information processing apparatus 2, and generates the database 33b that includes the same information as the information in the setting file F. Thereafter, the process in the flowchart is terminated.

FIG. 8 is a diagram illustrating an example of the database 33b. In this example, information on each of the sensors 1 is written with a serial number in the database 33b. The flag, the sensor type, the sensor ID, the tag name, the region, the parameter p, and the like are described in an associated manner for each serial number. Further, a total number of sensors and the number of unwritten sensors are also described. The total number of sensors is the total number of the sensors 1 corresponding to the serial numbers. The number of unwritten sensors is the number of flags that are set to OFF.

Meanwhile, it can be said that the database 33b is generated to allow the application to handle the information in the setting file F. In this sense, the way of handling the database 33b in the application can be regarded as the same as the way of handling the setting file F. The database 33b and the setting file F may be appropriately replaced with each other as long as there is no contradiction.

Referring back to FIG. 6, the data managing unit 34 will be described again. The data managing unit 34 uses the short-range wireless communication performed by the sensor communication unit 31, and writes the parameter p, which corresponds to each of the sensors 1 and which is included in the setting file F, to each of the sensors 1. In this case, the data managing unit 34 may determine (confirm) whether it is allowed to write the parameter p to the corresponding sensor 1. For example, the parameter p that is not writable to the sensor 1 may be present depending on the sensor type. The parameter p that is unique to a temperature sensor is not writable to a pressure sensor or a vibration sensor. It is possible to reduce or prevent writing of the parameter p as described above and eventually reduce or prevent an error that may be caused by the writing as described above.

The data managing unit 34 writes the tag name together with the parameter p to the sensor 1. The sensor 1 in which the tag name is written is regarded as the sensor 1 in which the parameter p is already written. Further, the data managing unit 34 reflects a writing result in the database 33b. For example, the data managing unit 34 rewrites the flag of the sensor 1, in which the parameter p has been written, among the flags in the database 33b from OFF to ON.

The data managing unit 34 reads the parameter p that is written in the sensor 1, from the sensor 1 in which the parameter p has been written as described above. Writing and reading of the parameter p as described above may be performed while NFC communication is performed once. In this case, the data managing unit 34 performs a process of writing the parameter p and a process of reading the parameter p to and from the single sensor 1 while the NFC communication is performed once. The NFC communication that is performed once indicates NFC communication that is used since establishment of the NFC communication between the terminal device 3 and the single sensor 1 until disconnection of the NFC communication.

By reading the parameter p that is written in the sensor 1, the data managing unit 34 confirms whether the parameter p is correctly written in the sensor 1. The confirmation is performed by, for example, comparing the read parameter p and the corresponding parameter p in the database 33b. The data managing unit 34 performs the confirmation operation, so that it becomes not necessary for the user of the terminal device 3 to perform operation, such as visual confirmation, and it is possible to reduce or prevent a confirmation error caused by the visual confirmation, for example. Meanwhile, if the parameter p is not accurately written in the sensor 1, the data managing unit 34 may write the parameter p again (rewrite).

The data managing unit 34 reflects, in the database 33b, a writing result of the parameter p to the sensor 1. Examples of the writing result include rewrite of the flag from OFF to ON due to success in writing. The writing result is reflected every time writing of the parameter p to the single sensor 1 is completed. This means that an operating state is stored in the database 33b. It becomes possible to interrupt or resume writing operation of the parameters p to the plurality of sensors 1.

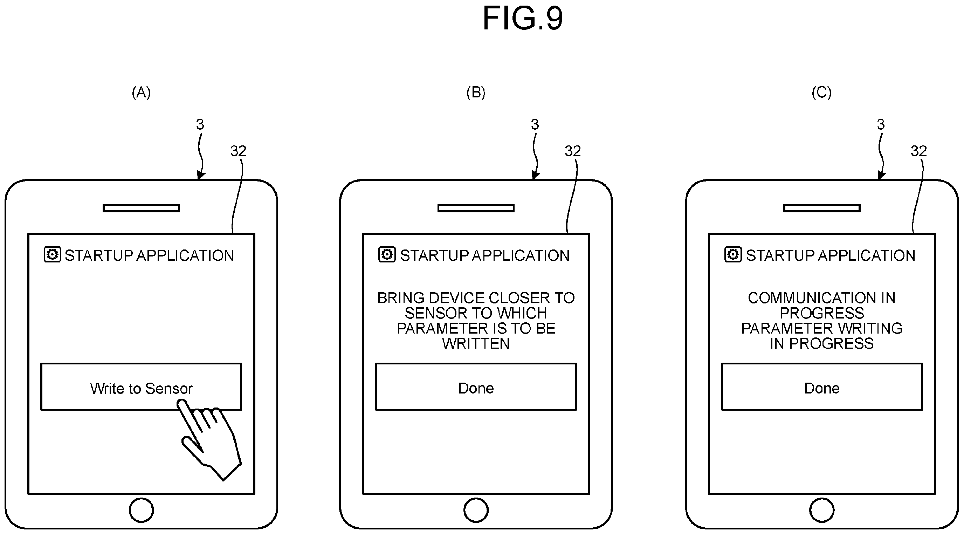

FIG. 9 is a diagram illustrating an example of an application screen at the time of the writing operation. In this example, an application will be referred to and displayed as a startup application. The UI unit 32 of the terminal device 3 is illustrated as a touch panel display, for example. FIG. 9(A) illustrates an example of a start screen. If "Write to Sensor" is selected by tapping or the like, writing operation (flow) is performed. During the writing operation, screens as illustrated in FIG. 9(B) and FIG. 9(C) are displayed. In the example illustrated in FIG. 9(B), a message of "bring a device closer to a sensor to which a parameter is to be written" for requesting the user of the terminal device 3 to perform operation is displayed. If the user of the terminal device 3 brings the terminal device 3 closer to the sensor 1, NFC communication is established, and the parameter p is written to the sensor 1. During the operation, as illustrated in FIG. 9(C) for example, information indicating that the communication is being performed and the parameter is being written is displayed. If "Done" is selected during the writing operation, the operation is interrupted and an initial screen is displayed again (FIG. 9(A)). If "Write to Sensor" is selected again, the operation is resumed.

As a specific flow of writing the parameter p to each of the sensors 1, various scenarios may be available. If the user is an operator or the like with a certain degree of expertise, the user is able to narrow down the number of scenarios and avoid complexity or the like. A first scenario and a second scenario will be described below as specific examples of the scenarios.

### First Scenario

In the first scenario, the parameters p that are described in a sequential manner in the database 33b are written, in order of description, to the sensor 1 that is arbitrarily selected from among the plurality of sensors 1. Unlike the second scenario to be described later, individual identification of the sensor 1 is not needed. For example, the user of the terminal device 3 brings the terminal device 3 closer to the arbitrary sensor 1 to which the parameter p is to be written among the plurality of sensors 1. With use of NFC communication between the arbitrary sensor 1 and the terminal device 3, the parameter p for which the flag is OFF and which is described first (at the top of the list) among the parameters p that are described (listed) in a sequential manner in the database 33b is written to the sensor 1.

When the first scenario is adopted, it is acceptable that the sensor ID in the database 33b is blank. After the parameter p is actually written to the sensor 1, the sensor ID that is written in the sensor 1 is added to a corresponding position in the database 33b.

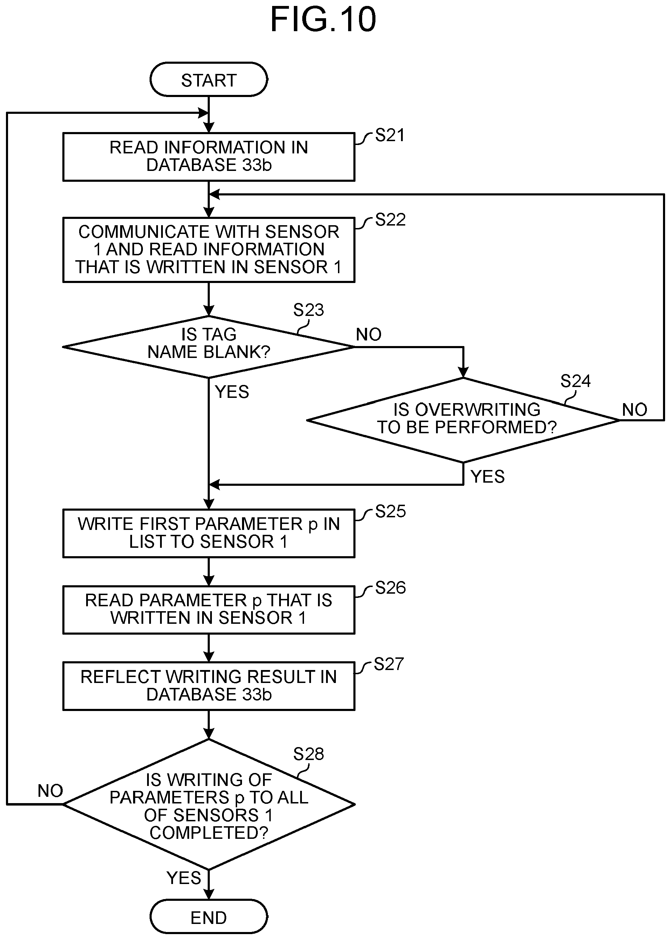

FIG. 10 is a flowchart illustrating an example of a process (method) that is performed by the terminal device 3 when performing the writing operation based on the first scenario. It is assumed that, as described above with reference to FIG. 7, the application is already activated and the database 33b is already generated.

At Step S21, the information in the database 33b is read. The data managing unit 34 reads the information, such as the total number of the sensors, the number of unwritten sensors, and the parameter p, in the database 33b, for example.

At Step S22, communication with the sensor 1 is performed (NFC communication is established), and the information that is written in the sensor 1 is read. The user of the terminal device 3 brings the terminal device 3 to an arbitrary one of the sensors 1. The NFC communication between the terminal device 3 and the arbitrary sensor 1 is established, and the information, such as the sensor type, the sensor ID, the tag name, the region, and the parameter p, written in the sensor 1 is read. Meanwhile, if the parameter p is not written in the sensor 1, the tag name, the parameter p, and the like read from the sensor 1 are blank.

At Step S23, it is determined whether the tag name is blank. The data managing unit 34 determines whether the tag name acquired from the sensor 1 is blank. If the tag name is blank, the parameter p is not yet written in the sensor 1, and in other cases, the parameter p is already written. If the tag name is blank (Step S23: Yes), the process goes to Step S25. In other cases (Step S23: No), the process goes to Step S24.

At Step S24, it is determined whether overwriting is to be performed. For example, the UI unit 32 displays that the tag name and the parameter p are already written in the sensor 1 or displays a query about whether the parameter p needs to be overwritten in the sensor 1. The user operates the terminal device 3 and determines whether to perform overwriting. If overwriting is to be performed (Step S24: Yes), the process goes to Step S25. In other cases (Step S24: No), the process returns to Step S22. In this case, the user of the terminal device 3 selects another one of the sensors 1, and brings the terminal device 3 to the selected sensor 1. The same process is performed on the selected sensor 1.

Through the processes at Step S23 and Step S24 as described above, it is possible to reduce or prevent an operational error of mixing up the sensors 1. For example, it is possible to prevent the user from writing the parameter p to the sensor 1 again without realizing that the parameter p is already written in the sensor 1.

At Step S25, the parameter p that is listed first is written to the sensor 1. The data managing unit 34 writes (or may overwrite), to the sensor 1, the first parameter p and the first tag name for which the flag is set to OFF among the parameters p and the tag names that are described in a sequential manner in the database 33b. The NFC communication that is established at previous Step S22 is continuously used.

At Step S26, the parameter p that is written in the sensor 1 is read. The data managing unit 34 reads, from the sensor 1 to which the parameter p is written at previous Step S25, the parameter p that is written in the sensor 1. It is confirmed that the parameter p is correctly written in the sensor 1. The NFC communication that is used at this time is the same NFC communication that has been established at previous Step S22 and that has been used at previous Step S25. After confirmation of the writing, the NFC communication that has been established at previous Step S22 and that has been used is cancelled, and the NFC communication performed once is terminated. Meanwhile, if the parameter p is not correctly written in the sensor 1, it may be possible to perform the process at Step S25 again.

At Step S27, the writing result is reflected in the database 33b. For example, the data managing unit 34 rewrites the flag, which corresponds to the parameter that has been written at previous Step S25 and read at previous Step S26 among the flags in the database 33b, from OFF to ON. The number of unwritten sensors in the database 33b is also updated.

At Step S28, it is determined whether writing of the parameters p to all of the sensors 1 is completed. For example, if the number of unwritten sensors in the database 33b reaches zero, the data managing unit 34 determines that the writing is completed. It may be possible to determine that the writing is completed if the number of flags that are set to ON reaches the total number of the sensors. The determination may be performed by the user of the terminal device 3. If the writing is completed (Step S28: Yes), the process in the flowchart is terminated. In other cases (Step S28: No), the process returns to Step S21.

Through the writing operation based on the first scenario as described above for example, it is possible to consecutively and efficiently write the parameters p to the sensors 1.

### Second Scenario

In the second scenario, the parameter p corresponding to the sensor 1 for which NFC communication is established is extracted from among the parameters p in the database 33b, and the parameter p is written to the corresponding sensor 1. Therefore, the sensor 1 is individually identified on the basis of the sensor ID that is read from the sensor 1. For example, the user of the terminal device 3 brings the terminal device 3 closer to the arbitrary sensor 1 to which the parameter p is to be written among the plurality of sensors 1. With use of NFC communication between the sensor 1 and the terminal device 3, the data managing unit 34 reads, from the sensor 1 (that is, the sensor 1 to which the parameter p is not yet written), the sensor ID that is written in the sensor 1. The data managing unit 34 writes the parameter p, which corresponds to the sensor ID in the database 33b, to the sensor 1 that corresponds to the sensor ID in the database 33b among the sensors 1 for which the sensor IDs are read.

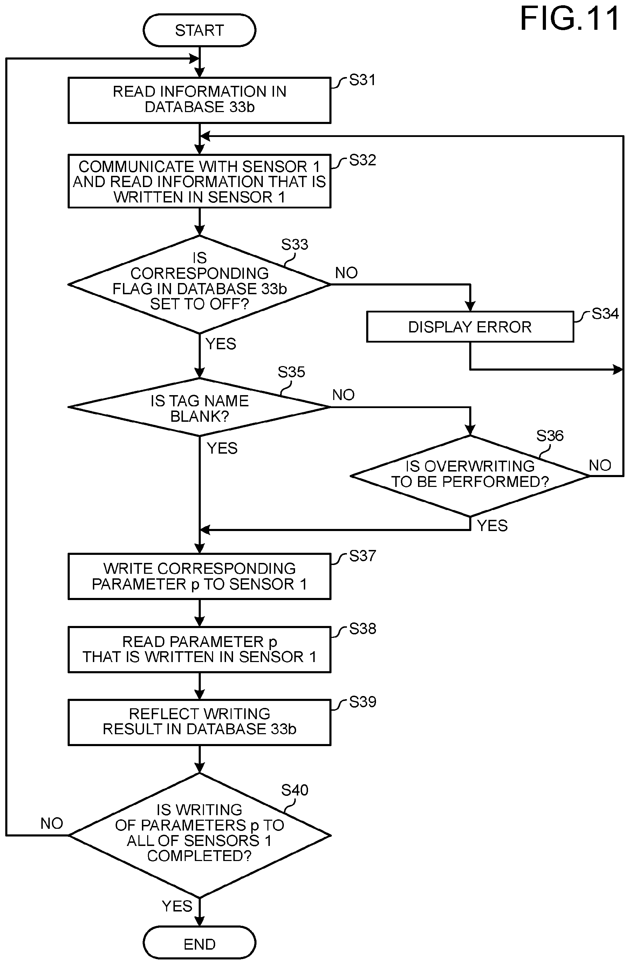

FIG. 11 is a flowchart illustrating an example of a process (method) that is performed by the terminal device 3 when performing writing operation based on the second scenario. Processes at Step S31 and Step S32 are the same as the processes at Step S21 and Step S22 in FIG. 10 as described above. The information in the database 33b is read. Further, communication with the sensor 1 is performed, and the information (including the sensor ID) that is written in the sensor 1 is read.

At Step S33, it is determined whether the corresponding flag in the database 33b is set to OFF. The data managing unit 34 determines whether the flag corresponding to the same sensor ID as the sensor ID of the sensor 1 acquired at previous Step S32 among the flags in the database 33b is set to OFF. If the flag is OFF (Step S33: Yes), the process goes to Step S35. In other cases (Step S33: No), the process goes to Step S34.

At Step S34, an error is displayed. For example, the UI unit 32 displays that the parameter p is already written in the sensor 1. Thereafter, the process returns to Step S32. The user of the terminal device 3 selects another one of the sensors 1, and brings the terminal device 3 closer to the selected sensor 1. The same process is performed on the selected sensor 1.

Processes at Step S35 and Step S36 are the same as the processes at Step S23 and Step S24 in FIG. 10 as described above. It is determined whether the tag name is blank, and it is determined whether overwriting is to be performed. If the tag name is blank (Step S35: Yes), the process goes to Step S37.

At Step S37, the corresponding parameter p is written to the sensor 1. The data managing unit 34 writes the parameter p and the tag name, which correspond to the sensor ID in the database 33b, to the sensor 1 for which the sensor ID is read at previous Step S32. Writing that also functions as checking using the sensor ID is performed.

Processes at Step S38 to Step S40 are the same as the processes at Step S26 to Step S28 in FIG. 10 as described above. The parameter p that is written in the sensor 1 is read and confirmed, and a writing result is reflected in the database 33b. If writing of the parameters p to all of the sensors 1 is completed, the process in the flowchart is terminated.

Through the writing operation based on the second scenario as described above for example, it is possible to consecutively and efficiently write the parameters p to the sensors 1.

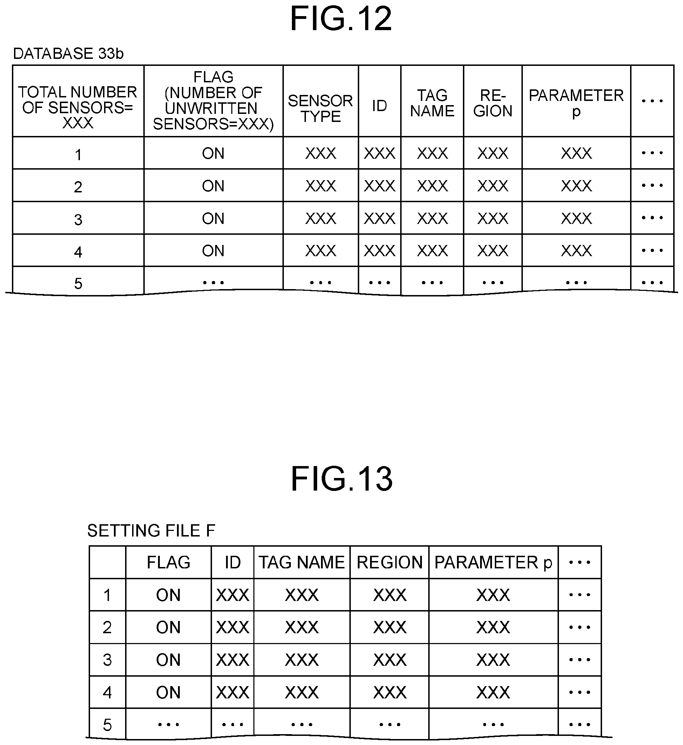

FIG. 12 is a diagram illustrating an example of the database 33b after completion of the writing operation. The database 33b is different from the database 33b illustrated in FIG. 8 as described above in that the writing result is reflected. For example, the flags are rewritten from OFF to ON and the number of unwritten sensors is updated. The data managing unit 34 (FIG. 6) of the terminal device 3 updates the setting file F on the basis of the database 33b. The writing result of the parameters p to the sensors 1 is reflected in the setting file F.

FIG. 13 is a diagram illustrating an example of the updated setting file F. The setting file F is different from the setting file F illustrated in FIG. 5 as described above in that the writing result is reflected. For example, the flags are rewritten from OFF to ON.

The updated setting file F is returned from the terminal device 3 to the information processing apparatus 2 (FIG. 1). For example, the setting file F is sent from the terminal device 3 to the information processing apparatus 2 via the predetermined folder as described above. The updated setting file F is stored in the storage unit 22 (FIG. 2) of the information processing apparatus 2. The original setting file F may be overwritten or the updated setting file F may be stored as a different file.

The data managing unit 23 of the information processing apparatus 2 may perform error check on the parameters p in the updated setting file F. It is possible to perform double check including the error check that is performed at the time of generating the setting file F. Furthermore, the data managing unit 23 generates a report based on the updated setting file F. The report may be generated by the startup tool, similarly to generation of the setting file F.

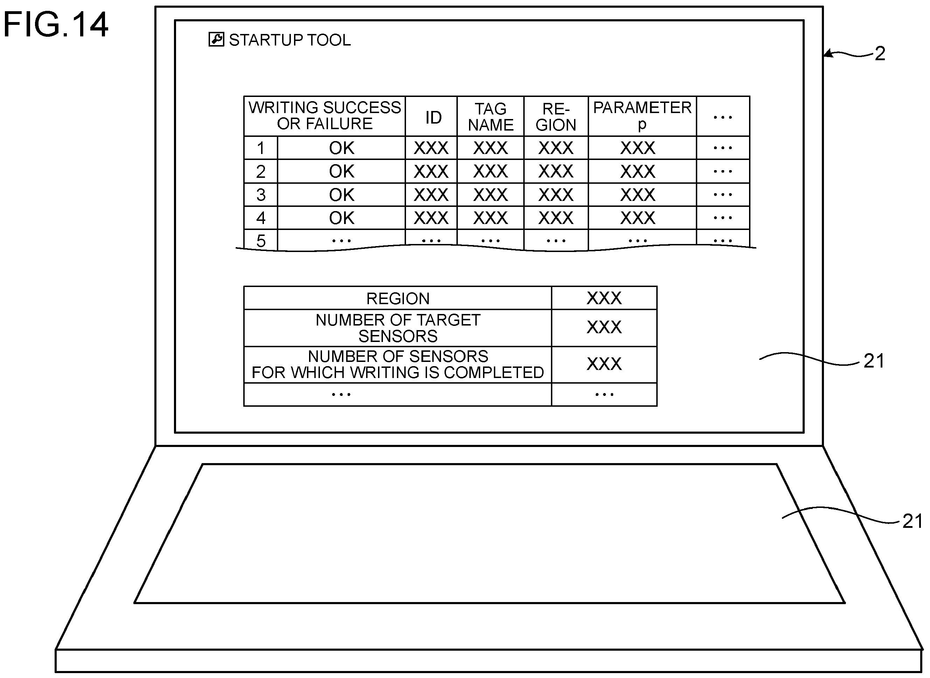

FIG. 14 is a diagram illustrating an example of the tool screen at the time of generation of the report. The report is generated based on the updated setting file F and displayed. The writing result of the parameter p to each of the sensors 1 is displayed in an upper part of the screen. In this example, writing success or failure, the sensor ID, the tag name, the region, the parameter p, and the like are collectively displayed for each serial number corresponding to each of the sensors 1. Writing success or failure = OK indicates that writing of the parameter p is successful. Meanwhile, if writing is failed, writing success or failure = NG. A summary indicating an overall result is displayed in a lower part of the screen. In this example, the number of target sensors, the number of sensors for which writing is completed, and the like with respect to a certain region (for example, Japan or the like in Asia) are displayed.

According to the system 100 as described above, the setting file F that includes the parameters p of the plurality of sensors 1 is generated in advance by the tool (startup tool) on the information processing apparatus 2. With use of the setting file F, the parameters p are consecutively written to the respective sensors 1 by the application (startup application) on the terminal device 3. For example, in the writing operation based on the first scenario, the parameters p are written to the sensors 1 in order of description (in order of list) in the setting file F without individually identifying the sensors 1. In the writing operation based on the second scenario, the sensors 1 are individually identified from the sensor IDs, and the corresponding parameters p in the setting file F (in the database 33b) are extracted and written to the sensors 1. The state of the writing operation is stored in the setting file F (the database 33b), so that it is possible to interrupt or resume the operation. The writing result is reflected in the setting file F, so that it is possible to confirm whether writing of the parameter p to each of the sensors 1 is successful or failed and it is possible to confirm the written parameter p, for example. For example, it is possible to generate and display the report by the tool in the information processing apparatus 2.

A comparison with one example of the conventional technology will be described below. For example, conventionally, a parameter is written to a sensor by using a smartphone as described below. First, a user brings the smartphone closer to the sensor 1, and reads a parameter that is written in the sensor by using NFC communication. Subsequently, the user operates the smartphone and manually edits the parameter while viewing the list. Finally, the user brings the smartphone closer to the sensor again, and writes the parameter to the sensor by using the NFC communication. This operation has problems as described below.

A first problem is that NFC communication needs to be performed twice to set the parameter, so that an operation time is increased due to the communication. For example, it takes 10 to 30 seconds or more to perform NFC communication once, which has a relatively large impact on the operation time. A second problem is that a screen of the smartphone is small and it is difficult to display all of the parameters on the single screen. For example, it is necessary to switch between pages. Furthermore, the parameter is changed by the user at an operating site while visually checking the list. Therefore, it takes a long time and an error is likely to occur. A third problem is that the user needs to use the smartphone again to read the parameter that is written to the sensor and visually check the parameter in order to confirm whether the parameter is correctly written to the sensor. Therefore, a confirmation error is likely to occur. At least one of the problems as described above may be dealt with by the system 100.

As for the first problem, in the system 100, the parameter p is written to the sensor 1 and the parameter p is read from the sensor 1 while NFC communication is performed once. It is possible to reduce the operation time as compared to a case in which NFC communication needs to be performed twice. As for the second problem, in the system 100, the tool is executed and the parameter p is edited on the information processing apparatus 2, such as a PC, instead of the terminal device 3, such as a smartphone. It is possible to display a large number of pieces of information once in a screen with an increased size, so that it is possible to improve visibility. Consequently, it is possible to improve operability. As a result, it is possible to reduce the operation time needed to edit the parameter p or the like, so that it is possible to reduce or prevent an error. As for the third problem, in the system 100, the application on the terminal device 3 automatically reads and checks the parameter p written in the sensor 1 by using the setting file F (the database 33b). Therefore, it is possible to reduce or prevent a confirmation error caused by visual confirmation or the like performed by the user.

In addition, according to the system 100, the application on the terminal device 3 determines whether the tag name is already written in the sensor 1 for example, so that it is possible to reduce or prevent mixing up of the sensors 1. Furthermore, if the user is limited to an operator or the like with a certain degree of expertise, it is possible to prevent complexity by narrowing down the scenario, such as the first scenario and the second scenario, for the writing operation. It is possible to simplify the operation of the user, automatically check an operational error, and reduce the operation time. Meanwhile, the tool program 22a and the application program 33a may be provided as an integrated program file or may be provided as separate program files.

### Modification

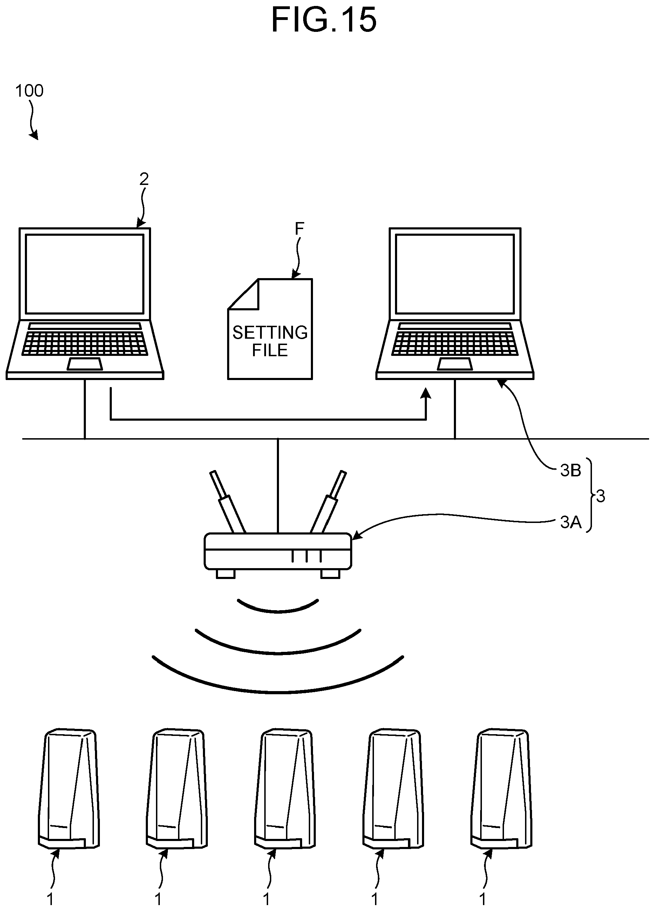

The disclosed technology is not limited to the embodiments as described above. In one embodiment, the functions of the terminal device 3 may be provided in a plurality of apparatuses in a distributed manner. This will be described below with reference to FIG. 15.

FIG. 15 is a diagram illustrating the terminal device 3 according to a modification. In this example, the terminal device 3 includes a device 3A and a device 3B. Among the functions of the sensor communication unit 31, the UI unit 32, and the storage unit 33 of the terminal device 3 as described above, the sensor communication unit 31 is implemented by the device 3A, and the UI unit 32 and the storage unit 33 are implemented by the device 3B. For example, the device 3A may be a LoRaWAN (registered trademark) gateway. The device 3B may be regarded as a higher-level device (higher-level PC or the like) when viewed from the information processing apparatus 2 and the device 3A. The device 3B may be a server device (cloud server device) that is able to communicate with the information processing apparatus 2 and the device 3A via a network, for example. Even with the terminal device 3 configured as described above, it is possible to write the parameters p to the sensors 1 by using the setting file F that is generated by the information processing apparatus 2 as described above. The plurality of sensors 1 are arranged in a communication range of the device 3A, and the parameter p is written in a sequential manner to an arbitrarily selected one of the sensors 1. Operation of the user is not always needed to select the sensor 1. It is possible to write the parameters p from the higher-level system to the sensors 1.

### Example of hardware configuration of apparatus

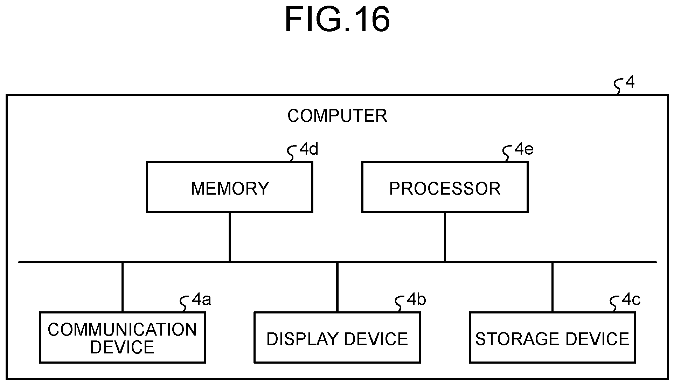

FIG. 16 is a diagram illustrating an example of a hardware configuration of the apparatus. A computer 4 illustrated as an example functions as the information processing apparatus 2, the terminal device 3, and the like as described above. As the hardware configuration of the apparatus, a communication device 4a, a display device 4b, a storage device 4c, a memory 4d, a processor 4e, and the like, all of which are connected to one another via a bus or the like, are illustrated as examples. Examples of the storage device 4c include a hard disk drive (HDD), a read only memory (ROM), and a random access memory (RAM). Meanwhile, the memory 4d may be included in the storage device 4c.

The communication device 4a is a network interface card or the like and enables communication with a different apparatus. The display device 4b is, for example, a touch panel, a display, or the like. The storage device 4c functions as the storage unit 22, the storage unit 33, and the like.

For example, the processor 4e reads (extracts) the tool program 22a as illustrated in FIG. 2 from the storage device 4c or the like, loads the tool program 22a onto the memory 4d, and causes the computer to perform the process of the information processing apparatus 2. Further, the processor 4e reads the application program 33a as illustrated in FIG. 6 from the storage device 4c or the like, loads the application program 33a onto the memory 4d, and causes the computer to perform the process of the terminal device 3.

Programs, such as the tool program 22a and the application program 33a, may be collectively or separately distributed via a network, such as the Internet. Further, the programs may be collectively or separately recorded in a computer-readable recording medium, such as a hard disk, a flexible disk (FD), a compact disk-ROM (CD-ROM), a magneto-optical disk (MO), or a digital versatile disk (DVD), and may be executed by being read from the recording medium by the computer.

The technology as described above is identified as described below, for example. The disclosed technology includes a program. As explained above with reference to FIG. 1 to FIG. 16, the program includes the tool program 22a and the application program 33a. The tool program 22a causes the information processing apparatus 2 to perform a process of collectively displaying, in an editable manner, the parameters p that are to be written to each of the sensors 1, and a process of generating the setting file F that includes the parameters p (Step S2 and Step S4). The application program 33a causes the terminal device 3 to perform a process of writing the parameter p corresponding to each of the sensors 1 included in the setting file F, to each of the sensors 1 by using short-range wireless communication (Step S25 and Step S37).

According to the program as described above, the parameters p are edited on the information processing apparatus 2 instead of the terminal device 3. For example, if the information processing apparatus 2 is a PC or the like and the terminal device 3 is a smartphone or the like, the information processing apparatus 2 is able to display a larger number of pieces of information than the terminal device 3 at once. It is possible to improve visibility and operability. It is possible to reduce the operation time needed to edit the parameters p and reduce or prevent an operational error. The terminal device 3 writes the parameters p included in the setting file F to the sensor 1 by using short-range wireless communication. In this manner, it is possible to improve efficiency of the writing operation of the parameters p to the sensors 1.

The application program 33a may cause the terminal device 3 to perform a process of reading the parameter p that is written in the sensor 1, from the sensor 1 to which the parameter p is written through the writing process, (Step S26 and Step S38), and the application program 33a may cause the terminal device 3 to perform a process of writing the parameter p and a process of reading the parameter p to and from the single sensor 1 among the plurality of sensors 1 while the short-range wireless communication is performed once (Step S25 and Step S26, Step S37 and Step S38). The user need not visually confirm whether the parameter p is correctly written in the sensor 1, so that it is possible to reduce or prevent a confirmation error due to the visual confirmation. Furthermore, the process is completed while the short-range wireless communication is performed once, so that it is possible to reduce the operation time as compared to a case in which the short-range wireless communication is performed twice.

As explained above with reference to FIG. 5, FIG. 8, and FIG. 10 for example, the parameters p of the respective sensors 1 are described in a sequential manner in the setting file F, and the process of writing the parameter p may include a process of writing, in order of description, the parameters p that are described in the setting file F to an arbitrarily selected one of the sensors 1 (Step S25). Through the writing operation based on the first scenario as described above for example, it is possible to consecutively and efficiently write the parameters p to the sensor 1.

As explained above with reference to FIG. 5, FIG. 8, and FIG. 11 for example, the sensor ID and the parameter p of each of the sensors 1 may be described in an associated manner in the setting file F, the application program 33a may cause the terminal device 3 to perform a process of reading the sensor ID that is written in the sensor 1 from the sensor 1 to which the parameter p is not yet written through the process of writing the parameter p (Step S32), and the process of writing the parameter p may include a process of writing the parameter p that corresponds to the sensor ID in the setting file F, to the sensor 1 that corresponds to the sensor ID in the setting file F (the database 33b) among the sensors 1 for which the sensor IDs are read through the process of reading the sensor ID (Step S37). Through the writing operation based on the second scenario as described above for example, it is possible to consecutively and efficiently write the parameters p to the sensors 1. Furthermore, it is possible to perform writing that also functions as checking using the sensor ID.

As explained above with reference to FIG. 10 to FIG. 13 for example, the application program 33a may cause the terminal device 3 to perform a process of reflecting the writing result in the setting file F (the database 33b), where the writing result is obtained through the process of writing the parameter p (Step S27 and Step S39). The state of the writing operation is stored, so that it is possible to interrupt or resume the operation.

As explained above with reference to FIG. 14 for example, the tool program 22a may cause the information processing apparatus 2 to perform a process of generating a report based on the setting file F in which the writing result is reflected. It is possible to confirm whether writing of the parameter p to each of the sensors 1 is successful or failed, and confirm the written parameter p or the like.

The disclosed technology includes the recording medium that is described above with reference to FIG. 16 for example. The recording medium is a computer-readable recording medium in which the above-described programs, that is, the tool program 22a and the application program 33a, are recorded.

The disclosed technology includes the method that is described above with reference to FIG. 4, FIG. 10, and FIG. 11 for example. The method includes collectively displaying, in an editable manner, the parameters p that are to be written to the plurality of sensors 1, generating the setting file F that includes the parameters p (Step S2 and Step S4), and writing the parameter p corresponding to each of the sensors 1 included in the setting file F, to each of the sensors 1 by using short-range wireless communication (Step S25 and Step S37). Through the method as described above, it is possible to improve efficiency of the writing operation of the parameters p to the sensors 1 as explained above.

The disclosed technology includes the system 100 that is described above with reference to FIG. 1 and FIG. 15 for example. The system 100 includes the information processing apparatus 2 and the terminal device 3. The information processing apparatus 2 collectively displays, in an editable manner, the parameters p that are to be written to the plurality of sensors 1, and generates the setting file F that includes the parameters p. The terminal device 3 writes the corresponding parameter p to each of the sensors included in the setting file F, to each of the sensors 1 by using short-range wireless communication. Through the system 100 as described above, it is possible to improve efficiency of the writing operation of the parameters p to the sensors 1 as explained above.

## Claims

1. A program comprising:
a tool program (22a) that causes an information processing apparatus (2) to execute a process of collectively displaying parameters (p) in an editable manner, the parameters (p) being to be written to each of sensors (1), and generating a setting file (F) that includes the parameters (p); and
an application program (33a) that causes a terminal device (3) to execute a process of writing a parameter (p) corresponding to each of the sensors (1) included in the setting file (F), to each of the sensors (1) by using short-range wireless communication.

2. The program according to claim 1, wherein
the application program (33a) causes the terminal device (3) to execute a process of reading and confirming a parameter (p) that is written in a sensor (1), from a sensor (1) to which a parameter (p) is written at the writing the parameter (p); and
the application program (33a) causes the terminal device (3) to execute a process of writing and reading the parameter (p) to and from a single sensor (1) among the plurality of sensors (1) while the short-range wireless communication is performed once.

3. The program according to claim 1 or 2, wherein
parameters (p) of the respective sensors (1) are described in a sequential manner in the setting file (F), and
the writing the parameter (p) includes writing, in order of descriptions, the parameters (p) that are described in the setting file (F) to an arbitrarily selected one of the sensors (1).

4. The program according to claim 1 or 2, wherein
a sensor ID and the parameter (p) of each of the sensors (1) are described in an associated manner in the setting file (F),
the application program (33a) causes the terminal device (3) to execute a process of reading the sensor ID that is written in the sensor (1) from the sensor (1) to which the parameter (p) is not yet written at the writing the parameter (p); and
the writing the parameter (p) includes writing a parameter (p) that corresponds to the sensor ID in the setting file (F), to the sensor (1) that corresponds to the sensor ID in the setting file (F) among the sensors (1) for which the sensor IDs are read at the reading.

5. The program according to any one of claims 1 to 4, wherein
the application program (33a) causes the terminal device (3) to execute a process of reflecting a writing result in the setting file (F), the writing result being obtained at the writing the parameter (p).

6. The program according to claim 5, wherein
the tool program (22a) causes the information processing apparatus (2) to execute a process of generating a report based on the setting file (F) in which the writing result is reflected.

7. A computer-readable recording medium having stored therein the program according to any one of claims 1 to 6.

8. A method comprising:
collectively displaying parameters (p) in an editable manner, the parameters (p) being to be written to each of sensors (1), and generating a setting file (F) that includes the parameters (p); and
writing a parameter corresponding to each of the sensors (1) included in the setting file (F), to each of the sensors (1) by using short-range wireless communication.

9. A system (100) comprising:
an information processing apparatus (2) that collectively displays, parameters (p) in an editable manner, the parameters (p) being to be written to each of sensors (1), and generates a setting file (F) that includes the parameters (p); and
a terminal device (3) that writes a parameter (p) corresponding to each of the sensors (1) included in the setting file (F), to each of the sensors (1) by using short-range wireless communication.
